# EUROPÄISCHE PATENTSCHRIFT

(11) **EP 1 148 083 B1**
(45) Veröffentlichungstag und Bekanntmachung des Hinweises auf die Patenterteilung: **03.03.2004**
(21) Anmeldenummer: 01109373.9
(22) Anmeldetag: 18.04.2001
(51) Int. Cl.: C08J 7/04, C08L 27/12, C09D 127/12, C08K 3/00, C09D 127/18

(54) **Flächiges Halbzeug und Verfahren zu dessen Herstellung**
Sheetlike preform and process for preparing same
Produit semi-fini en feuille et procédé de sa production

(30) Priorität: 19.04.2000 DE 10019678
(43) Veröffentlichungstag der Anmeldung: 24.10.2001
(73) Patentinhaber: SGL CARBON AG, 65203 Wiesbaden (DE)
(72) Erfinder: Öttinger, Oswin, Dr., 86405 Meitingen (DE); Mechen, Silvia, 86405 Meitingen (DE); Jung, Manfred, 86679 Ellgau (DE)

(56) Entgegenhaltungen:
- EP-A- 0 268 233
- EP-A- 0 268 958
- US-A- 4 147 824
- US-A- 4 961 891

## Beschreibung

Die Erfindung geht aus von einem flächigen Halbzeug gemäß dem Oberbegriff von Anspruch 1, von einem Verfahren zu dessen Herstellung gemäß dem Oberbegriff von Anspruch 11 sowie von einem aus dem Halbzeug gefertigten Bauteil, insbesondere von einer Flachdichtung gemäß Anspruch 10.

Flachdichtungen aus Fluorkunststoff zeigen im Vergleich zu Faserdichtungen, die mit anderen Polymeren gebunden sind, oder im Vergleich zu Graphitdichtungen eine bessere Impermeabilität. Nachteilig sind jedoch bei Fluorkunststoffdichtungen die relativ geringe Druckstandfestigkeit bzw. die stark ausgeprägte Setz- oder Kriechneigung der Flachdichtungen aus Fluorkunststoff, weshalb im Falle einer zwischen zwei gegeneinander verspannten Flanschen gehaltenen Flachdichtung die auf diese wirkende Flächenpressung mit der Zeit abnimmt. Dadurch treten insbesondere unter höheren Temperaturen unerwünschte Leckagen auf.

Um das Kriechen der Fluorkunststoff-Dichtungswerkstoffe zu verringern, wurden in der Vergangenheit Fluorkunststoff-Compounds verwendet, die mit anorganischen Substanzen wie z.B. mit Glasfasern, Quarz, Siliciumkarbid oder Bariumsulfat gefüllt sind. Hierdurch wird der .Dichtungswerkstoff zwar kriechstabiler und druckstandfester, jedoch sinkt dessen Anpassungsfähigkeit an die je nach Bearbeitung mehr oder weniger rauhen Flanschoberflächen, so daß sich ausgeprägte Oberflächen-Leckage-Kanäle zwischen Dichtung und Flansch ausbilden können.

Um diesem Problem zu begegnen, wurden beispielsweise aus der US 4,961,891 bekannte Schichtverbunde aus Fluorkunststoffen entwickelt, mit einer aus gefülltem Fluorkunststoff-Substrat bestehenden Platte, die beidseits je eine vergleichsweise dicke, weiche Beschichtung aus Fluorkunststoffen aufweist. Solche Schichtverbunde weisen aufgrund des guten Verformungsvermögens der weichen äußeren Beschichtung und der demzufolge guten Anpassungsfähigkeit an Oberflächenrauhigkeiten schon bei geringen bis mittleren Flächenpressungen eine niedrige Kurzzeit-Leckagerate auf.

Überraschend hat sich nun aber gezeigt, daß solche Schichtverbunde über längere Zeit betrachtet eine ähnlich geringe Kriechstabilität haben wie dies bei den anfangs erwähnten Dichtungen aus ungefülltem oder gering gefülltem Fluorkunststoff der Fall war. Der Grund hierfür ist, daß die weichen äußeren Beschichtungen zu dick sind. Über die bekannten Setzvorgänge hinaus wirkt die relativ dicke Beschichtung wie ein Schmierfilm, der ein unerwartet hohes Abgleiten der Dichtung gegenüber der Flanschoberfläche verursacht, was zu einem Verlust der Vorspannung führt, wodurch die Dichtigkeit solcher Dichtverbindungen mit der Zeit nachläßt.

Der vorliegenden Erfindung liegt demgegenüber die Aufgabe zugrunde, ein flächiges Halbzeug und insbesondere ein daraus gefertigtes Bauteil der eingangs erwähnten Art, insbesondere eine Flachdichtung, zu schaffen, welches sich in einer Dichtverbindung durch eine hohe Dichtigkeit und zugleich hohe Kriechfestigkeit auszeichnet. Darüber hinaus besteht die Aufgabe darin, ein kostengünstiges Verfahren zur Herstellung eines derartigen Halbzeugs bereitzustellen.

Die Aufgabe hinsichtlich des flächigen Halbzeugs wird gemäß Anspruch 1 dadurch gelöst, daß beim Halbzeug die mittlere Schichtdikke der Beschichtung höchstens 20 µm beträgt und die Platte eine Shore-Härte D von mindestens 65 aufweist.

Die Aufgabe hinsichtlich der Bereitstellung eines Verfahrens zur Herstellung des Halbzeugs wird gemäß Anspruch 11 dadurch gelöst, daß das Sintern des Hohlzylinders unter Inertgasatmosphäre erfolgt, vorzugsweise unter Stickstoff, und daß auf mindestens eine Oberfläche der Platte durch Tauchen, Aufspritzen, Rakeln, Sprühen oder durch Druckverfahren, insbesondere durch Siebdruck, eine Polytetrafluorethylen-Dispersion derart aufgebracht wird, daß die Platte mit einer dünnen Polytetrafluorethylen-Dispersions-Beschichtung mit einer mittleren Schichtdicke von höchstens 20 µm, vorzugsweise 2 µm bis 8 µm versehen wird.

### Vorteile der Erfindung

Das erfindungsgemäße Halbzeug gemäß Anspruch 1 hat den Vorteil, daß wegen der relativ dünnen Deckschicht eine mikroskopisch gesehen formschlüssige Verzahnung der Oberflächen des aus der Plattè gestanzten. Bauteils (Dichtung) mit der Oberfläche eines gegen diese vorgespannten Bauelements, beispielsweise einer Flanschoberfläche, möglich ist, wodurch es zu einer Fließbehinderung kommt Durch die dünne weiche Beschichtung in Kombination mit der relativ harten Platte wird Kriechtendenzen wirksam entgegengewirkt, so daß sich gegenüber dem Stand der Technik eine signifikant verbesserte Druckstandfestigkeit von Dichtungen ergibt, welche beispielsweise aus dem erfindungsgemäßen Halbzeug gefertigt wurden. Mit höchstens 20 µm liegt die mittlere Schichtdicke im unteren Bereich üblicher Flanschrauhigkeiten, so daß einerseits durch Oberflächenrauhigkeiten hervorgerufene Leckagekanäle auch bei niedrigen Vorspannungen verschlossen werden können und andererseits aber auch die vorteilhafte Verzahnung der Oberflächen stattfinden kann.

Nach einer besonders bevorzugten Alternative ist vorgesehen, daß die dünne Beschichtung stellenweise durchbrochen und nur ein Teil der Oberfläche der Platte von ihr bedeckt ist, vorzugsweise 50% bis annähernd 100%. Beispielsweise wird die Beschichtung im Siebdruckverfahren netz- oder gitterartig aufgedruckt, so daß beschichtete Abschnitte der Platte vorzugsweise als quer zueinander verlaufende Gitterlinien ausgebildet sind, welche unbeschichtete Abschnitte der Plattenoberfläche vollständig umschließen und somit keine durchgehenden Leckagekanäle auftreten. Dies hat den Vorteil, daß die unbeschichteten Abschnitte der Plattenoberfläche eine formschlüssige Verzahnung mit den zugeordneten Oberflächen ungehindert eingehen können. Eine solche direkte Verzahnung hemmt das Kriechen der unter Vorspannung stehenden Dichtung erheblich.

Für das erfindungsgemäße Funktionieren des Halbzeuges und einer daraus hergestellten Dichtung ist eine hohe Härte der Platte wichtig. Beim Herstellen der Halbzeuge gemäß Anspruch 11 wird eine hohe Härte dadurch erreicht, daß der Hohlzylinder, von welchem die Platten durch Schälen hergestellt werden, unter einer Inertgasatmosphäre, vorzugsweise unter Stickstoff gesintert wird. Darüber hinaus ist für eine hohe Härte der Platte auch eine relativ lange Sinterdauer unter Sinterendtemperatur günstig. Die Sinterendtemperatur liegt im Bereich zwischen 350 und 390°C

Das Aufbringen der dünnen Beschichtung erfolgt durch Verfahren der Oberflächentechnik, insbesondere durch Siebdruck derart, daß die Platte eine dünne Polytetrafluorethylen-Dispersions-Beschichtung mit einer mittleren Schichtdicke von höchstens 20 µm, vorzugsweise 2 µm bis 8 µm aufweist.

Gemäß einer besonders zu bevorzugenden Ausführungsform des erfindungsgemäßen Verfahrens ist vorgesehen, daß die mittlere Schichtdicke der folien- oder netzartigen Polytetrafluorethylen-Dispersionsbeschichtung abhängig von der Maschenweite des beim Siebdruck verwendeten Siebs eingestellt wird. Hierdurch ist eine einfache und kostengünstige Fertigung unter hoher Wiederholgenauigkeit möglich.

Durch die weiteren, in den Unteransprüchen aufgeführten Maßnahmen sind vorteilhafte Weiterbildungen und Verbesserungen der Erfindung möglich.

### Zeichnungen

Ausführungsbeispiele der Erfindung sind in den Zeichnungen dargestellt und in der nachfolgenden Beschreibung näher erläutert. Es zeigen :
- Fig.1: ein schematisierte, nicht-maßstäbliche Querschnittsdarstellung einer Fiachdichtung, welche aus einem flächigen Halbzeug gemäß der Erfindung gefertigt ist;
- Fig.2: ein Fließschema des Herstellverfahrens der Flachdichtung von Fig.1;
- Fig.3: eine Draufsicht auf eine Dispersionsbeschichtung des Halbzeuges oder der Flachdichtung von Fig.1 mit Gitterstruktur.

### Beschreibung der Ausführungsbeispiele

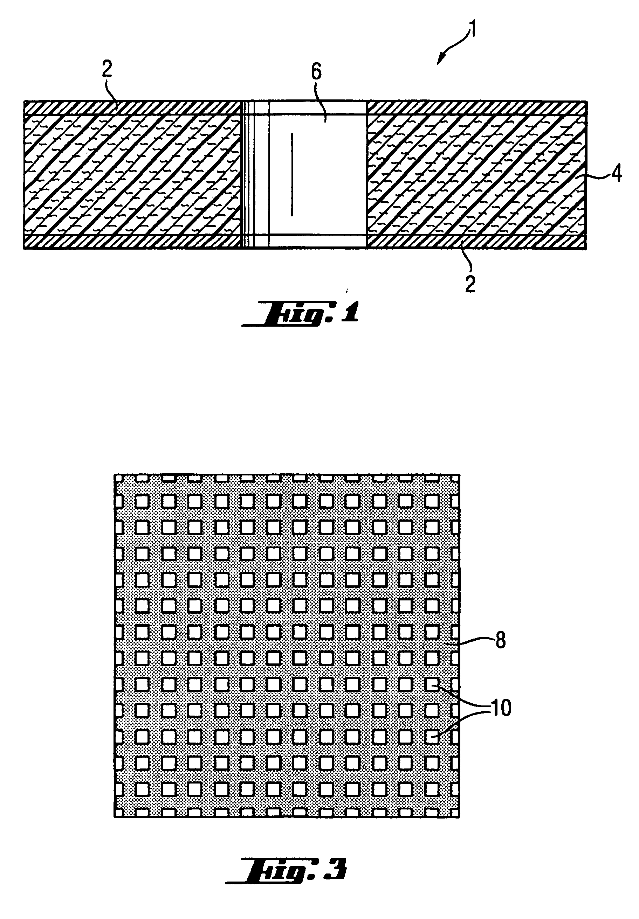

Die in Fig.1 im Querschnitt gezeigte ringförmige Flachdichtung 1 zur Abdichtung einer ansonsten nicht dargestellten Flanschverbindung ist aus einem flächigen Halbzeug gemäß der Erfindung gefertigt, vorzugsweise gestanzt, und beinhaltet eine beidseitig mit je einer dünnen Beschichtung 2 versehene Platte 4.

Die. Platte 4 besteht im wesentlichen aus einem mit Füllstoffen verstärkten Matrixmaterial. Die Füllstoffe umfassen wahlweise eine oder mehrere der folgenden inerten anorganischen Substanzen, die entweder in kömiger oder in faseriger Form eingebracht werden können : Aluminiumoxid (Al₂O₃), Siliciumdioxid (SiO₂), Siliciumcarbid (SiC), Glas, nicht graphitierter, graphitierter Kohlenstoff oder nur plättchenförmiger Glimmer, wobei der Füllanteil vorzugsweise mehr als 25 Gew.-% beträgt. Das Matrixmaterial der Platte 4 umfaßt vorzugsweise vollfluorierte Fluorkunststoffe aus der Gruppe Polytetrafluorethylen (PTFE), Modifiziertes Polytetrafluorethylen (TFM), Tetrafluorethylen/Hexafluorpropylen-Copolymer (FEP) oder Perfluoralkoxy-Copolymer (PFA). Allgemein gilt, daß die Härte der Platte 4 umso größer ist, je höher der Füllgrad ist. Erfindungsgemäß ist der Füllgrad der Platte 4 mit Füllstoffen derart gewählt, daß in Kombination mit dem Sinterprozeß die Kunststoffplatte eine Shore-Härte D von mindestens 65 besitzt. Gemäß der bevorzugten Ausführungsform beträgt die Shore-Härte D der Platte 4 vorzugsweise mindestens 68, insbesondere mindestens 70.

Die dünne Beschichtung 2 der Platte 4 hat die Aufgabe, jeglichen beispielsweise durch Fehler der Oberflächen wie Kratzer, Riefen oder Oberflächenrauhigkeiten hervorgerufenen Leckagekanal in der Flanschverbindung durch elastische und/oder plastische Verformungen an den dichtenden Oberflächen der Anordnung zu verschließen. Die Beschichtung 2 besteht vorzugsweise in einer wässrigen Fluorkunststoffdispersion, welche beispielsweise Polytetrafluorethylen (PTFE), Modifiziertes Polytetrafluorethylen (TFM), Tetrafluorethylen/Hexafluorpropylen-Copolymer (FEP) oder Perfluoralkoxy-Copolymer (PFA) beinhaltet. Um eine möglichst hohe Druckstandfestigkeit der Dichtung 1 zu erzeugen, beträgt deren mittlere Schichtdicke erfindungsgemäß mehr als 0 µm und höchstens 20 µm, gemäß der bevorzugten Ausführungsform höchstens 15 µm. Besonders gute Druckstandfestigkeiten bei zugleich hoher Dichtigkeit konnten beispielsweise durch mittlere Schichtdicken innerhalb eines Bereichs von 2 µm bis 8 µm erzielt werden.

In Tabelle 1 sind die charakteristischen Parameter der Herstellprozesse sowie der Materialeigenschaften von 7 Beispielen von Flachdichtungen dargestellt, wobei neben der Zusammensetzung der jeweiligen Flachdichtung 1, der Dicke der Beschichtung 2, der Sinterdauer und Sinteratmosphäre die für die Verwendung in Dichtverbindungen entscheidenden Vergleichskriterien - Shore-Härte D der Platte gemäß DIN 53505, Warmsetzwert bestimmt nach DIN 28090-2 bei T = 150 °C und 20 MPa Flächenpressung (DIN 28091-3) sowie die Leckage gemessen gemäß DIN 28090-1 bei 20 MPa Flächenpressung und 40·10⁵ Pa Stickstoffinnendruck ― angegeben sind. Als Vergleichsmaßstab dient die nachstehend beschriebene Flachdichtung des Standes der Technik (Beispiel 1).

### Beispiel 1: Glasfaserverstärkte PTFE-Flachdichtung mit 25% Glasfaseranteil ohne Beschichtung

75 Teile PTFE (Polytetrafluorethylen)-Pulver (TFM 1700) der Fa. Dyneon, Burgkirchen, wurden mit 25 Teilen entschlichteten Glasfasern (MF 7904) der Fa. Bayer, Leverkusen, in einem Labormischer der Fa. Eirich (Typ R02) homogen vermischt. Anschließend wurde das Compound-Pulver in eine Stahlhohlzylinderform mit Innendurchmesser ⌀ᵢₙₙₑₙ = 60 mm und Außendurchmesser ⌀_{außen} = 120 mm eingebracht und langsam, in einem Zuge bis zu einer spezifischen Flächenpressung von 35 MPa kaltgepreßt. Nach dem Ausformen wurde der Pressling in einem Umluftofen an Luft gesintert, wobei er nach langsamem Aufheizen ca. 4 h auf Sinterendtemperatur von 375 °C gehalten wurde. Nach dem Abkühlen im Ofen wurde auf den Ebenen der Stirnseiten des PTFE-

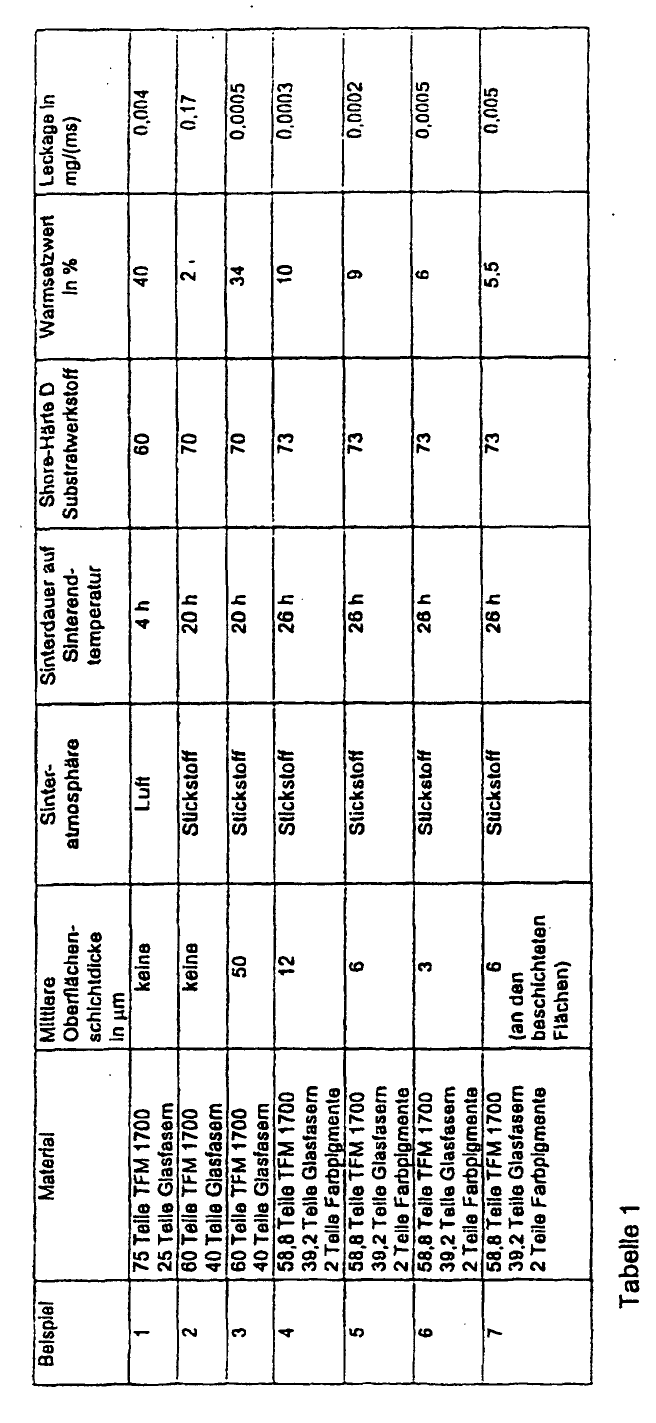

Hohlzylinders die Shore-Härte D des Materials in Anlehnung an DIN 53505 bestimmt, wobei sich hierfür ein Wert von 60 ergab.

Im Anschluß daran wurde der PTFE-Hohlzylinder auf ca. 120 °C vorgewärmt, auf einen Metalldorn aufgepresst und in einer Schälmaschine zu PTFE-Bahnen mit einer Dicke von 2 mm geschält. Diese ein Zwischenprodukt bildenden PTFE-Bahnen wurden abgelängt und in einer Laminierpresse geplättet. Schließlich wurden aus den Bahnen Ring-Flachdichtungen gestanzt und die so erhaltenen Flachdichtungen 1 gemäß DIN 28090-1 (Innendurchmesser dᵢ = 50 mm und Außendurchmesser dₐ = 90 mm) bezüglich Ihres Leckageverhaltens charakterisiert. Außerdem wurden an Ring-Flachdichtungen 1 gemäß DIN 28090-2 (Innendurchmesser dᵢ = 55 mm und Außendurchmesser dₐ = 75 mm) Warmsetzwerte gemessen.

Bei der Bestimmung des Leckageverhaltens wurden die Flachdichtungen 1 nach der Vorkonditionierungsbehandlung in einer Prüfpresse mit 20 MPa Flächenpressung belastet und ein Stickstoffinnendruck von 40·10⁵ Pa aufgegeben. Mit Hilfe der Auffangmethode wurde dann die Leckagerate bestimmt, wobei sich hierfür ein Wert von 0,004 mg/(ms) ergab, wie aus Tab. 1 hervorgeht. Des weiteren wurde an den Flachdichtungen 1 der Warmsetzwert ermittelt, welcher die prozentuale Verformung einer Dichtung bei konstant gehaltener Flächenpressung (20 MPa), bei 150 °C und nach einer Einwirkdauer von 16 Stunden anzeigt und damit ein Maß für die Kriechstabilität des Materials ist. Der ermittelte Wert für den Warmsetzwert ist in Tab. 1 aufgeführt und mit 40% erwartungsgemäß hoch. Ein Grund hierfür ist der verhältnismäßig geringe Füllgrad von 25 % (Tabelle 1, Spalte 2).

### Beispiel 2: Glasfaserverstärkte PTFE-Flachdichtung mit 40% Glasfaseranteil ohne Beschichtung.

Anstelle des in Beispiel 1 aufgeführten Glasfaseranteils wurden in diesem Beispiel statt 25 Gewichtsteile 40 Gewichtsteile Glasfasern verwendet. In zusätzlicher Abweichung zu Beispiel 1 wurde der kaltgepreßte PTFE/Glasfaser-Hohlzylinder nicht an Luft sondern unter Inertgasatmosphäre (Stickstoff) gesintert. Dieses wurde dadurch bewerkstelligt, daß in den Umluftofen eine Sinterglocke eingebracht wurde, die mehrmals evakuiert und mit Stickstoffgas vor dem Sinterprozeß gespült wurde. Beim Sintern des Hohlzylinders betrug die Sinterdauer mindestens 1,5 Stunden je cm Wandstärke des Hohlzylinders unter Sinterendtemperatur, im vorliegenden Fall ca. 20 Stunden bei 375°C. Nach der Ofenabkühlung wurde analog zu Beispiel 1 die Shore-Härte D bestimmt, wobei sich wegen des höheren Glasfaseranteils und des speziellen Sinterverfahrens ein Wert von 70 ergab.

Im Anschluß wurde der Hohlzylinder durch Schälen zu PTFE-Bahnen mit einer Dicke von 2,2 mm weiterverarbeitet. Die deutlich oberflächenrauhen Bahnen wurden dann auf eine Dicke von 2,0 mm kalandriert. Aus diesem Halbzeug wurden entsprechend Beispiel 1 Flachdichtungen 1 gestanzt.

Wegen des höheren Glasfaseranteils und des speziellen Sinterverfahrens - nämlich langer Sinterdauer und Sintems unter Inertgas - ergibt sich eine größere Shore-Härte D des Substratmaterials, was einen sehr niedrigen Warmsetzwert von nur 2% nach sich zieht. Demgegenüber nahm die Stickstoff-Leckagerate bei 40·10⁵ Pa Innendruck und 20 MPa Flächenpressung mit 0,17 mg/(ms) einen relativ hohen Wert ein, weii das Anpassungsvermögen der unbeschichteten Dichtflächen aufgrund der hohen Materialhärte begrenzt ist.

### Beispiel 3: Glasfaserverstärkte PTFE-Flachdichtung mit 40% Glasfaseranteil und beidseitig aufgeschweißter, 50 µm dicker PTFE-Folie.

Das Zwischenprodukt aus Beispiel 2 (Shore-Härte D = 70) wurde nach dem Schälprozeß entnommen. Auf beiden rauhen Oberflächen des Zwischenproduktes wurde an Luft je eine 50 µm dicke, aus Modifiziertem Polytetrafluorethylen (TFM 1700) bestehende Schälfolie flächig aufgeschweißt, wodurch man eine harte Platte 4 mit beidseitig weicher Beschichtung erhielt. Die Schweißparameter waren 375 °C, 2 MPa Flächenpressung und ca. 10 min Preßzeit. Aus der beschichteten Platte wurden wiederum Flachdichtungen gestanzt und analog zu den vorhergehenden Beispielen die Leckagerate und der Warmsetzwert gemessen.

Wegen der weichen PTFE-Beschichtung 2 und dem demzufolge guten Vermögen, Leckagekanäle zu verschließen konnte gegenüber Beispiel 2 zwar eine wesentlich niedrigere Leckagerate von nur 0,0005 mg/(ms) erzielt werden (siehe Tab.1). Jedoch stieg durch die im Mittel 50 µm dicke Beschichtung der Warmsetzwert erheblich an, nämlich auf 34%. Wie auf Seite 2 erläutert, ist der Grund darin zu sehen, daß über die bekannten Setzvorgänge hinaus die relativ dicke Beschichtung wie ein Schmierfilm wirkt, der ein unerwartet hohes Abgleiten der Dichtung gegenüber der Flanschoberfläche verursacht.

### Beispiele 4, 5 und 6: Glasfaserverstärkte PTFE-Flachdichtungen mit 40% Glasfaseranteil und beidseitig aufgetragener PTFE-Dispersionsbeschichtung mit einer mittleren Schichtdicke von 3 µm (Beispiel 6), 6 µm (Beispiel 5) und 12 µm (Beispiel 4).

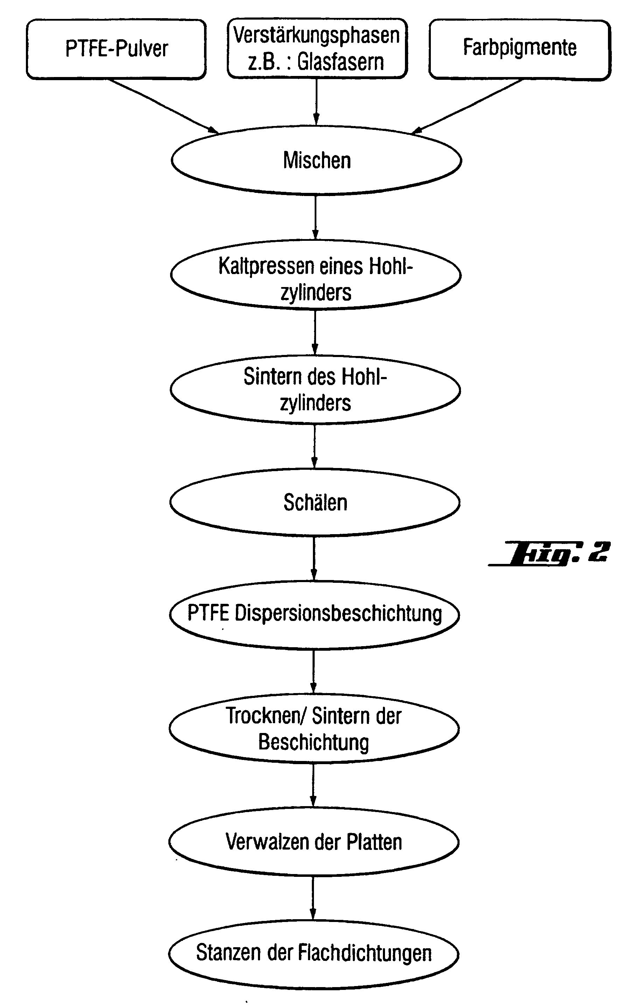

Die im folgenden beschriebenen Flachdichtungen 1 und deren Herstellprozesse stellen bevorzugte Ausführungformen gemäß der Erfindung dar, wobei die Schritte zur Herstellung im Fließschema gemäß Fig. 2 zusammengefaßt sind.

Anfangs wurden 58,8 Teile (Gew.-%) PTFE-Pulver mit 39,2 Teilen (Gew.-%) Glasfasern gemischt. Zusätzlich wurden zum Einfärben der Flachdichtung 2 Teile (Gew.-%) Farbpigmente der Fa. Ferro beim Compoundier-/Mischprozeß zugesetzt. Abweichend zu Beispiel 2 wurde die Sinterdauer auf Sinterendtemperatur unter Sauerstoffausschluß von 20 Stunden auf 26 Stunden verlängert. Vor dem Schälen des gesinterten Hohlzylinders wurde wiederum die Shore-Härte D an den Stirnflächen des gesinterten Hohlzylinders bestimmt, wobei sich ein Wert von 73 ergab.

Die harte PTFE-Bahn wurde nach dem Schälen auf 2,2 mm Dikke in Plattenform abgelängt und in einer Laminierpresse geplättet. Anschließend wurde auf beide Oberflächen einer solcherart erzeugten Platte 4 mittels Siebdruck vollflächig eine PTFE-Dispersion aufgetragen. Alternativ hätte der Auftrag der PTFE-Dispersion auch durch Verfahren wie Tauchen, Spritzen, Rakeln, Sprühen oder durch andere Druckverfahren erfolgen können.

Die Beschichtungsmischung bestand dabei zu 88,5% aus einer wässrigen PTFE-Dispersion (E15264) der Fa. Dyneon, zu 10% aus einem Entschäumer (Fumexol der Fa. Ciba) und zu 1,5% aus einem Verdicker (Viscalex VG der Fa. Ciba). Die Beschichtungen 2 wurden mit drei unterschiedlichen Sieben durchgeführt. Die Siebe bestanden aus einem Polyestergewebe, hergestellt aus Polyestermonofilamenten von 48 µm Durchmesser (Kennbuchstabe T). Die Anzahl der Monofilamente betrug in Kett- und Schußrichtung 48 (Beispiel 4), 90 (Beispiel 5) und 120 (Beispiel 6), Filamente pro Zentimeter. Künftig werden diese Siebe mit 48T, 90T und 120 T bezeichnet. Es war festzustellen, daß mit abnehmender Filamentdichte zunehmend mehr Dispersion auf die harte PTFE-Platte 4 aufgetragen wurde.

Nach der anschließenden Trocknungs- und/oder Sinterbehandlung, während der die Verarbeitungshilfsstoffe thermisch entfernt wurden, wurden die beschichteten Platten 4 gewogen und mit dem Ausgangsgewicht vor der Dispersionsbeschichtung verglichen. Korreliert man die Massenzunahme der Platten 4 mit der Dichte von reinem PTFE (2,2 g/cm³) und den Abmessungen der Platte 4, läßt sich daraus eine mittlere Dispersionsschichtdicke bestimmen.

Beim Beschichten der Platte 4 mittels des Siebdruckverfahrens ist die gewünschte mittlere Schichtdicke der dünnen Polytetrafluorethylen-Dispersionsbeschichtung 2 abhängig von der Maschenweite des beim Siebdruck verwendeten Siebs einstellbar. Die Beschichtung 2 war umso dicker, je größer die Maschenweite des Siebs war. Im einzelnen führte dies für die Beispiele 4, 5 und 6 zu folgenden Ergebnissen :

### Beispiel 4 :

Ein Sieb mit Maschenweite 48T lieferte eine mittlere Schichtdicke von 12 µm.

### Beispiel 5 :

Ein Sieb mit einer Maschenweite 90T lieferte eine mittlere Schichtdicke von 6 µm.

### Beispiel 6 :

Ein Sieb mit einer Maschenweite 120T lieferte eine mittlere Schichtdicke von 3 µm.

Im Anschluß an den Oberflächenbeschichtungsprozeß wurden die beschichteten Platten 4 von ca. 2,2 mm auf 2 mm Dicke verwalzt oder kalandriert, wodurch die Oberfläche glatter und die dünne, aus einer Dispersion aufgebrachte und thermisch nachbehandelte Beschichtung verdichtet wurde. Beim Kalandrieren einer Platte 4 mit einer solch dünnen Beschichtung 2 kann es vorkommen, daß die Beschichtung 2 durchbrochen wird. Dies ist jedoch kein Nachteil, da sich die beschichtungsfreien aber stets von Beschichtungsmaterial umgebenen Flächen dann - wie dies im Vorstehenden bereits beschrieben worden ist - mit den anliegenden Gegenflächen von beispielsweise Flanschen verzahnen können, was sich positiv auf das Unterdrücken von Kriechvorgängen auswirkt.

Lichtmikroskopische Untersuchungen an Querschliffen bestätigten zum einen die oben genannten mittleren Schichtdicken der Beschichtung 2 und zeigten des weiteren auf, daß mit abnehmender mittlerer Schichtdicke die aufgebrachte Schicht nicht immer einen geschlossenen Film bilden muß, so daß die Plattenoberfläche nur teilweise beschichtet ist. Aus den beschichteten PTFE-Platten 4 mit unterschiedlicher mittlerer Beschichtungsdicke 3 µm, 6 µm und 12 µm wurden wiederum Flachdichtungen zur Bestimmung des Warmsetzwertes und des Leckageverhaltens gestanzt.

Aus einem Vergleich der Warmsetzwerte für Beispiel 3 einerseits und für die Beispiele 4, 5 und 6 andererseits gemäß. Tabelle 1 geht hervor, daß die gegenüber der 50 µm Beschichtung wesentlich dünnere Beschichtung (3 µm bis 12 µm) den Warmsetzwert erheblich verminderte, nämlich von 34 % auf nur 6% bis 10%.

Aufgrund der bei den Beispielen 4, 5 und 6 relativ dünnen Beschichtung (3 µm bis 12 µm) war zu erwarten, daß die Leckagerate ähnlich hoch wie bei der unbeschichten, ähnlich harten Flachdichtung von Beispiel 2 sein würde. Überraschend war die Leckagerate im Vergleich zu Beispiel 2 jedoch um ungefähr drei Zehnerpotenzen niedriger.

### Beispiel 7: Glasfaserverstärkte PTFE-Flachdichtungen mit 40% Glasfaseranteil und beidseitig aufgebrachter PTFE-Dispersionsbeschichtung in Form eines Gittermusters.

Das PTFE-Substrat und die PTFE-Beschichtungsmischung wurden in gleicher Weise wie in den Beispielen 4, 5 und 6 beschrieben hergestellt. Im Gegensatz zu diesen Beispielen wurde jedoch nur ein Sieb aus Monofilamenten mit einer Filamentdichte von 90 Filamenten pro Zentimeter (90T) verwendet. Ein Teil des Siebgewebes wurde für die PTFE-Dispersion entsprechend der Fig. 3 undurchlässig gemacht. Diese undurchlässigen Partien des Siebes hatten jeweils quadratische Form mit einer Kantenlänge von zwei Millimetern. Die undurchlässigen Quadrate 10 waren mit jeweils zwei Millimetern Abstand so angeordnet, daß sich ein regelmäßiges "Gitter" ergab, dessen "Gitterlinien" 8 in Fig.3 schwarz dargestellt sind und eine Breite von 2 Millimetern haben.

Mit Hiife dieses Siebes konnte das PTFE-Substrat nun in gewünschter Weise nur partiell ― nämlich entlang der "Gitterlinien" ― mit PTFE-Dispersion beschichtet werden. Mit einem Sieb 90T und der in den Beispielen 4 bis 6 angegebenen Rezeptur der Dispersion stellt sich typischerweise eine lokale Beschichtungsdicke von sechs Mikrometern ein.

Im Anschluß an den Oberflächenbeschichtungsprozeß wurden die beschichteten Platten 4 zunächst thermisch nachbehandelt und anschließend von ca. 2,2 mm auf 2,0 mm Dicke (verwalzt oder) kalandriert, wodurch die Oberfläche glatter und die dünne, aus einer Dispersion aufgebrachte Beschichtung verdichtet wurde. Aus dem so hergestellten Halbzeug wurden anschließend Flachdichtungen gestanzt.

Beim Einsatz als Flachdichtung in einer Dichtverbindung ließ ein solchermaßen beschichtetes Material mit dem gitterförmigen Beschichtungsmuster keine durchgehenden Leckagekanäle zu, da die unbeschichteten Flächen vollständig von beschichteten umschlossen waren. Die unbeschichteten Flächen des PTFE-Substrates konnten eine besonders gute Verzahnung mit der angepreßten Flanschfläche sicherstellen, was sich positiv auf die Druckstandfestigkeit auswirkte, während die gitterförmig beschichteten Flächen des PTFE-Substrates für eine gute Abdichtung sorgten.

Der mit diesem Material erreichte Warmsetzwert von 5,5% lag niedriger als die Warmsetzwerte der praktisch vollflächig jedoch auch dünn beschichteten Materialien der Beispiele 4 bis 6.

Die Leckagerate war mit 0,005 mg/(ms) zwar etwas höher als die entsprechenden Werte der Beispiele 4 bis 6, lag aber immerhin zwei Zehnerpotenzen besser als das nicht beschichtete Material des Beispiels 2, Tabelle 1.

Die Oberfläche der Platte 4 ist in diesem Beispiel nur teilweise beschichtet. Der Beschichtungsgrad ist also kleiner als 100%. Bei anderen Abmessungen von beschichteten und unbeschichteten Flächen sowie bei anderen Beschichtungsmustem verändert sich der Beschichtungsgrad. Er liegt vorzugsweise zwischen 50% und 100%, wenn ähnlich günstige Wertekombinationen von Warmsetzwert und Leckagerate wie in diesem Beispiel 7 erzielt werden sollen.

Zusammenfassend ist festzustellen, daß eine Flachdichtung 1 aus relativ kriechfesten, harten PTFE-Platte mit einer relativ dünnen und weichen PTFE-Beschichtung 2 sowohl niedrige Warmsetzwerte als auch niedrige Leckageraten gewährleistet

Zusätzliche Versuche zu den obengenannten Beispielen zeigten, daß ein Erzielen einer möglichst hohen Härte der Kemplatte immer dann erreicht wurde, wenn unter Luftausschluß gesintert wurde und wenn eine bewußt lange Sinterzeit auf Sinterendtemperatur von größer 1,5 Stunden pro cm Wandstärke des Hohlzylinders gewählt wurde.

Die Anwendung der Erfindung ist nicht auf Flachdichtungen 1 beschränkt, vielmehr können aus dem erfindungsgemäßen Halbzeug auch andere Bauteile hergestellt werden, bei welchen die beschriebenen Vorteile wie beispielsweise ein geringer Warmsetzwert von Nutzen sind.

## Patentansprüche

1. Flächiges Halbzeug beinhaltend eine beschichtete Platte (4), wobei die Platte (4) aus einem Füllstoffe enthaltenden Fluorkunststoffsubstrat und die Beschichtung (2) aus Fluorkunststoffen besteht und bei der die Beschichtung (2) im Vergleich zur Platte (4) weich und dünn ist, **dadurch gekennzeichnet, daß** die mittlere Schichtdicke der Beschichtung (2) höchstens 20 µm beträgt und der Substratwerkstoff der Platte (4) eine Shore-Härte D von mindestens 65 aufweist.

2. Flächiges Halbzeug nach Anspruch 1, **dadurch gekennzeichnet, daß** die Füllstoffe der Platte (4) wahlweise eine oder mehrere inerte anorganische Substanzen in körniger oder in faseriger Form beinhalten, wobei die Füllstoffe mit einem Anteil von mehr als 25 Gew.-% enthalten sind.

3. Flächiges Halbzeug nach Anspruch 2, **dadurch gekennzeichnet, daß** die Füllstoffe der Platte (4) wahlweise eine oder mehrere der folgenden Substanzen beinhalten: Aluminiumoxid (Al₂O₃), Siliciumdioxid (SiO₂), Siliciumcarbid (SiC), Glas, Kohlenstoff in nicht graphitierter Form, in graphitierter Form, Glimmer.

4. Flächiges Halbzeug nach den Ansprüchen 1 bis 3, **dadurch gekennzeichnet, daß** das Matrixmaterial der Platte (4) aus einem fluorhaltigen Kunststoff besteht.

5. Flächiges Halbzeug nach den Ansprüchen 1 bis 4, **dadurch gekennzeichnet, daß** das Matrixmaterial der Platte (4) im wesentlichen aus vollfluorierten Kunststoffen aus der Gruppe Polytetrafluorethylen (PTFE), Modifiziertes Polytetrafluorethylen (TFM), Tetrafluorethylen/Hexafluorpropylen-Copolymer (FEP) oder Perfluoralkoxy-Copolymer (PFA) besteht.

6. Flächiges Halbzeug nach einem der vorhergehenden Ansprüche, **dadurch gekennzeichnet, daß** die dünne Beschichtung (2) der Platte (4) eine wässrige Fluorkunststoffdispersion umfaßt, welche vorzugsweise Polytetrafluorethylen (PTFE), Modifiziertes Polytetrafluorethylen (TFM), Tetrafluorethylen-/Hexafluorpropylen-Copolymer (FEP) oder Perfluoralkoxy-Copolymer (PFA) beinhaltet.

7. Flächiges Halbzeug nach einem der vorhergehenden Ansprüche, **dadurch gekennzeichnet, daß** die dünne Beschichtung (2) vollflächig ausgebildet ist.

8. Flächiges Halbzeug nach einem der vorhergehenden Ansprüche, **dadurch gekennzeichnet, daß** die dünne Beschichtung (2) , daß die dünne Beschichtung (2) stellenweise durchbrochen und nur ein Teil (8) der Oberfläche der Platte (4) von ihr bedeckt ist, vorzugsweise 50% bis fast 100%.

9. Flächiges Halbzeug nach Anspruch 7, **dadurch gekennzeichnet, daß** die Beschichtung (2) netz- oder gitterartig ist, wobei beschichtete Abschnitte (8) der Platte (4) auch als quer zueinander verlaufende Gitterlinien ausgebildet sind, welche unbeschichtete Abschnitte (10) der Platte (4) umschließen.

10. Flächiges Halbzeug nach einem der vorhergehenden Ansprüche, **dadurch gekennzeichnet, daß** die Shore-Härte D des Substratwerkstoffes für die Platte (4) vorzugsweise mindestens 68, insbesondere mindestens 70 beträgt und daß die mittlere Schichtdicke der Beschichtung (2) vorzugsweise höchstens 15 µm beträgt und insbesondere innerhalb eines Bereichs von 2 µm bis 8 µm liegt.

11. Bauteil, insbesondere Flachdichtung, **dadurch gekennzeichnet, daß** es aus einem flächigen Halbzeug nach einem der Ansprüche 1 bis 9 hergestellt, vorzugsweise gestanzt ist.

12. Verfahren zur Herstellung eines flächigen Halbzeugs aus Fluorkunststoffen nach einem der Ansprüche 1 bis 9, bei welchem ein Polytetrafluorethylen-Pulver mit einer Verstärkungsphase zu einem Compound-Pulver gemischt wird, das Compound-Pulver zu einem Hohlzylinder kaltgepreßt wird, der Hohlzylinder gesintert und von diesem Hohlzylinder mindestens eine Platte (4) abgeschält wird, **dadurch gekennzeichnet, daß** das Sintern des Hohlzylinders unter Inertgasatmosphäre erfolgt, vorzugsweise unter Stickstoff, und daß auf mindestens eine Oberfläche der Platte (4) durch Tauchen, Aufspritzen, Rakeln, Sprühen oder durch Druckverfahren, insbesondere durch Siebdruck, eine Polytetrafluorethylen-Dispersion derart aufgebracht wird, daß die Platte (4) mit einer dünnen Polytetrafluorethylen-Dispersions-Beschichtung (2) mit einer mittleren Schichtdicke von höchstens 20 µm, vorzugsweise 2 µm bis 8 µm versehen wird.

13. Verfahren nach Anspruch 11, **dadurch gekennzeichnet, daß** auf die Platte (4) aus Fluorkunststoff-Substrat mit Hilfe des Siebdrucks unterschiedliche Druckmuster mit unterschiedlicher Dispersionsmenge je Flächeneinheit aufgebracht werden.

14. Verfahren nach einem der Ansprüche 11 bis 12, **dadurch gekennzeichnet, daß** die Platte (4) nach dem Beschichten mit der Polytetrafluorethylen-Dispersions-Beschichtung (2) getrocknet und/oder gesintert wird.

15. Verfahren nach Anspruch 13, **dadurch gekennzeichnet, daß** nach dem Trocknen und/oder Sintern die auf die Platte (4) aufgebrachte Polytetrafluorethylen-Dispersions-Beschichtung (2) durch Walzen oder Pressen in die Oberfläche der Platte (4) eingearbeitet wird.

16. Verfahren nach einem der Ansprüche 11 bis 14, **dadurch gekennzeichnet, daß** beim Sintern des Hohlzylinders die Sinterdauer mindestens 1 Stunde je cm Wandstärke des Hohlzylinders unter Sinterendtemperatur beträgt, wobei die Sinterendtemperatur in einem Temperaturbereich zwischen 350 und 390 °C liegt.

17. Verfahren nach einem der Ansprüche 11 bis 15, **dadurch gekennzeichnet, daß** als Verstärkungsphase eine anorganische, inerte Substanz in Korn- oder Faserform in einer Menge von mindestens 25 Gew.-% bezogen auf die Compoundmischung verwendet wird.

18. Verfahren nach Anspruch 16, **dadurch gekennzeichnet, daß** als Verstärkungsphase eine anorganische, inerte Substanz aus der Gruppe Aluminiumoxid (Al₂O₃), Siliciumdioxid (SiO₂), Siliciumcarbid (SiC), Glas, nicht graphitierter, graphitierter Kohlenstoff oder Glimmer verwendet wird.

19. Verfahren nach einem der Ansprüche 11 bis 17, **dadurch gekennzeichnet, daß** aus der beschichteten Platte eine oder mehrere Flachdichtungen, insbesondere Ringdichtungen gefertigt werden, vorzugsweise durch Stanzen.

## Claims

1. A planar semifinished product including a coated sheet (4), said sheet (4) consisting of a fluoroplastic substrate containing fillers, and the coating (2) consisting of fluoroplastics, said coating (2) being soft and thin in comparison with the sheet (4), **characterised in that** the mean layer thickness of the coating (2) amounts to at most 20 µm and the substrate material of the sheet (4) exhibits a Shore-D hardness of at least 65.

2. Planar semifinished product according to Claim 1, **characterised in that** the fillers of the sheet (4) optionally include one or more inert inorganic substances in granular or fibrous form, the fillers being contained in a proportion amounting to more than 25 wt.%.

3. Planar semifinished product according to Claim 2, **characterised in that** the fillers of the sheet (4) optionally include one or more of the following substances: aluminium oxide (Al₂O₃), silicon dioxide (SiO₂), silicon carbide (SiC), glass, carbon in non-graphitized form, carbon in graphitized form, mica.

4. Planar semifinished product according to Claims 1 to 3, **characterised in that** the matrix material of the sheet (4) consists of a fluorine-containing plastic.

5. Planar semifinished product according to Claims 1 to 4, **characterised in that** the matrix material of the sheet (4) consists substantially of fully fluorinated plastics selected from the group comprising polytetrafluoroethylene (PTFE), modified polytetrafluoroethylene (TFM), tetrafluoroethylene/hexafluoropropylene copolymer (FEP) or perfluoroalkoxy copolymer (PFA).

6. Planar semifinished product according to one of the preceding claims, **characterised in that** the thin coating (2) of the sheet (4) comprises an aqueous fluoroplastic dispersion which preferably includes polytetrafluoroethylene (PTFE), modified polytetrafluoroethylene (TFM), tetrafluoroethylene/hexafluoropropylene copolymer (FEP) or perfluoroalkoxy copolymer (PFA).

7. Planar semifinished product according to one of the preceding claims, **characterised in that** the thin coating (2) is formed over the full surface.

8. Planar semifinished product according to one of the preceding claims, **characterised in that** the thin coating (2) is breached in places and only a part (8) of the surface of the sheet (4) is covered by it, preferably 50% to almost 100%.

9. Planar semifinished product according to Claim 8, **characterised in that** the coating (2) is reticular or latticed, with coated sections (8) of the sheet (4) also taking the form of lattice lines extending at right angles to one another and surrounding uncoated sections (10) of the sheet (4).

10. Planar semifinished product according to one of the preceding claims, **characterised in that** the Shore-D hardness of the substrate material for the sheet (4) preferably amounts to at least 68, in particular at least 70, and **in that** the mean layer thickness of the coating (2) preferably amounts to at most 15 µm and in particular lies within the range from 2 µm to 8 µm.

11. A structural component, in particular a flat gasket, **characterised in that** it is produced from a planar semifinished product according to one of Claims 1 to 9 and is preferably punched.

12. A process for producing a planar semifinished product from fluoroplastics, according to one of Claims 1 to 10, wherein a polytetrafluoroethylene powder is mixed with a reinforcing phase to form a compound powder, the compound powder is cold-pressed to form a hollow cylinder, the hollow cylinder is sintered, and at least one sheet (4) is peeled off from said hollow cylinder, **characterised in that** sintering of the hollow cylinder is effected under inert-gas atmosphere, preferably under nitrogen, and **in that** a polytetrafluoroethylene dispersion is applied onto at least one surface of the sheet (4) by dipping, spraying, blade coating, atomizing or by printing processes, in particular by screen printing, in such a way that the sheet (4) is provided with a thin polytetrafluoroethylene-dispersion coating (2) having a mean layer thickness of at most 20 µm, preferably 2 µm to 8 µm.

13. Process according to Claim 12, **characterised in that** varying print designs having varying amounts of dispersion per unit surface area are applied onto the sheet (4) consisting of fluoroplastic substrate with the aid of screen printing.

14. Process according to one of Claims 12 to 13, **characterised in that** the sheet (4) is dried and/or sintered after being coated with the polytetrafluoroethylene-dispersion coating (2).

15. Process according to Claim 14, **characterised in that** after drying and/or sintering the polytetrafluoroethylene-dispersion coating (2) applied onto the sheet (4) is worked into the surface of the sheet (4) by rolling or pressing.

16. Process according to one of Claims 12 to 15, **characterised in that** in the course of sintering of the hollow cylinder the duration of sintering amounts to at least 1 hour per cm of wall thickness of the hollow cylinder below the final sintering temperature, the final sintering temperature lying within a temperature range between 350 °C and 390 °C.

17. Process according to one of Claims 12 to 16, **characterised in that** by way of reinforcing phase, use is made of an inorganic, inert substance in granular or fibrous form in a quantity of at least 25 wt.% relative to the compound mixture.

18. Process according to Claim 17, **characterised in that** by way of reinforcing phase, use is made of an inorganic, inert substance selected from the group comprising aluminium oxide (Al₂O₃), silicon dioxide (SiO₂), silicon carbide (SiC), glass, non-graphitized carbon, graphitized carbon or mica.

19. Process according to one of Claims 12 to 18, **characterised in that** one or more flat gaskets, in particular ring gaskets, are produced from the coated sheet, preferably by stamping.

## Revendications

1. Produit semi-fini en feuille comprenant une plaque (4) revêtue, la plaque (4) se composant d'un substrat synthétique fluoré qui contient des masses de remplissage, le revêtement (2) est en matière synthétique fluorée (2) et ce revêtement (2) est mou et mince par comparaison à la , plaque (4),
**caractérisé en ce que**
l'épaisseur moyenne de la couche du revêtement (2) est au maximum de 20 µm et le matériau de substrat de la plaque (4) présente une dureté Shore D d'au moins 65.

2. Produit semi-fini en feuille selon la revendication 1,
**caractérisé en ce que**
les masses de remplissage de la plaque (4) contiennent au choix une ou plusieurs substances inorganiques inertes sous forme granuleuse ou fibreuse, les masses de remplissage étant contenues dans une proportion de plus de 25 % en masse.

3. Produit semi-fini en feuille selon la revendication 2,
**caractérisé en ce que**
les masses de remplissage de la plaque (4) contiennent au choix une ou plusieurs des substances suivantes : l'oxyde d'aluminium (Al₂O₃), le dioxyde de silicium (SiO₂), le carbure de silicium (SiC), le verre, le carbone sous forme non graphitée, sous forme graphitée, le mica.

4. Produit semi-fini en feuille selon les revendications 1 à 3,
**caractérisé en ce que**
le matériau matriciel de la plaque (4) se compose d'une matière synthétique contenant du fluor.

5. Produit semi-fini en feuille selon les revendications 1 à 4,
**caractérisé en ce que**
le matériau matriciel de la plaque (4) se compose principalement de matière synthétique intégralement fluorée choisie dans le groupe suivant : polytétrafluoréthylène (PTFE), polytétrafluoréthylène modifié (TFM), copolymère tétrafluoréthylène/hexafluorpropylène (FEP) ou copolymère perfluoralcoxy (PFA).

6. Produit semi-fini en feuille selon l'une des revendications précédentes,
**caractérisé en ce que**
le revêtement (2) mince de la plaque (4) comprend une dispersion aqueuse de matière synthétique fluorée qui contient de préférence du polytétrafluoréthylène (PTFE), du polytétrafluoréthylène modifié (TFM), un copolymère tétrafluoréthylène/hexafluorpropylène (FEP) ou un copolymère perfluoralcoxy (PFA).

7. Produit semi-fini en feuille selon l'une des revendications précédentes,
**caractérisé en ce que**
le revêtement (2) mince est formé sur toute la surface.

8. Produit semi-fini en feuille selon l'une des revendications précédentes,
**caractérisé en ce que**
le revêtement (2) mince est interrompu par endroits et recouvre seulement une partie (8) de la surface de la plaque (4), de préférence entre 50 % et presque 100 %.

9. Produit semi-fini en feuille selon la revendication 8,
**caractérisé en ce que**
le revêtement (2) se présente en réseau ou en grille, des sections (8) revêtues de la plaque (4) étant aussi formées en tant que lignes de grille qui s'étendent transversalement les unes par rapport aux autres et qui entourent des sections (10) non revêtues de la plaque (4).

10. Produit semi-fini en feuille selon l'une des revendications précédentes,
**caractérisé en ce que**
la dureté Shore D du matériau de substrat pour la plaque (4) est de préférence d'au moins 68, en particulier d'au moins 70, et l'épaisseur moyenne de couche du revêtement (2) est de préférence au maximum de 15 µm et se situe de préférence dans une plage comprise entre 2 µm et 8 µm.

11. Composant, en particulier joint plat,
**caractérisé en ce qu'**
il est fabriqué à partir d'un produit semi-fini en feuille selon l'une des revendications 1 à 10 et est de préférence estampé.

12. Procédé pour fabriquer un produit semi-fini en feuille constitué de matières synthétiques fluorées selon l'une des revendications 1 à 10, selon lequel on mélange une poudre de polytétrafluoréthylène avec une phase de concentration pour former une poudre composite, la poudre composite est pressée à froid pour former un cylindre creux, le cylindre creux est fritté et au moins une plaque (4) est prélevée de ce cylindre creux,
**caractérisé en ce que**
le frittage du cylindre creux est réalisé sous atmosphère de gaz inerte, de préférence sous azote, et une dispersion de polytétrafluoréthylène est appliquée sur au moins une surface de la plaque (4) par plongée, par projection, par raclage, par pulvérisation ou par un procédé d'impression, en particulier par sérigraphie, de telle manière que la plaque (4) est munie d'un mince revêtement (2) en dispersion de polytétrafluoréthylène dont l'épaisseur de couche moyenne est au maximum de 20 µm, de préférence comprise entre 2 µm et 8 µm.

13. Procédé selon la revendication 12,
**caractérisé en ce que**
sur la plaque (4) constituée d'un substrat en matière synthétique fluorée on applique par sérigraphie différents motifs d'impression avec une quantité de dispersion différente par unité de surface.

14. Procédé selon l'une des revendications 12 à 13,
**caractérisé en ce que**
la plaque (4) est séchée et/ou frittée après avoir été revêtue du revêtement (2) en dispersion de polytétrafluoréthylène.

15. Procédé selon la revendication 14,
**caractérisé en ce qu'**
après le frittage et/ou le séchage, le revêtement (2) en dispersion de polytétrafluoréthylène appliqué sur la plaque (4) est incorporé par laminage ou par pressage dans la surface de la plaque (4).

16. Procédé selon l'une des revendications 12 à 15,
**caractérisé en ce que**
lors du frittage du cylindre creux, la durée de frittage est au moins de 1 heure pour chaque cm d'épaisseur de la paroi du cylindre creux à température de fin de frittage, la température de fin de frittage étant dans la gamme de températures comprise entre 350 et 390 °C.

17. Procédé selon l'une des revendications 12 à 16,
**caractérisé en ce qu'**
on utilise en tant que phase de concentration une substance inorganique inerte sous forme de grain ou de fibre selon une quantité d'au moins 25 % en masse sur la base du mélange composite.

18. Procédé selon la revendication 17,
**caractérisé en ce qu'**
on utilise en tant que phase de concentration une substance inorganique inerte parmi le groupe suivant : l'oxyde d'aluminium (Al₂O₃), le dioxyde de silicium (SiO₂), le carbure de silicium (SiC), le verre, le carbone sous forme non graphitée, sous forme graphitée ou le mica.

19. Procédé selon l'une des revendications 12 à 18,
**caractérisé en ce qu'**
on fabrique, de préférence par estampage, à partir de la plaque revêtue un ou plusieurs joints plats, en particulier des joints annulaires.
